# EUROPÄISCHE PATENTANMELDUNG

(11) **EP 3 671 560 A1**
(43) Veröffentlichungstag der Anmeldung: **24.06.2020**
(21) Anmeldenummer: 19214142.2
(22) Anmeldetag: 06.12.2019
(51) Int. Cl.: G06K 9/62, G06T 7/00

(54) **VERFAHREN ZUM KLASSIFIZIEREN EINES GEBÄUDES, MASCHINELLES LERNSYSTEM SOWIE EIN VERFAHREN, EIN COMPUTERPROGRAMM UND EINE COMPUTERVORRICHTUNG ZUM ANLER-NEN DES MASCHINELLEN LERNSYSTEMS**

(30) Priorität: 20.12.2018 DE 102018222447
(71) Anmelder: Robert Bosch GmbH, 70442 Stuttgart (DE)
(72) Erfinder: Schmidt-Knorreck, Carina, 71394 Kernen (DE); Weitbrecht, Christof, 70567 Stuttgart (DE); Paulfeuerborn, Nina, 68163 Mannheim (DE); Steimer, Andreas, 5400 Baden (CH)

(57) **Zusammenfassung**

Es wird ein Verfahren (200) zum Klassifizieren eines Gebäudes (24) hinsichtlich eines Zustands des Gebäudes (24) vorgeschlagen, wobei zumindest eine Gebäudeinformation bereitgestellt wird und mittels eines maschinellen Lernsystems (38, 38a) abhängig von der bereitgestellten Gebäudeinformation das Gebäude (24) klassifiziert wird, wobei das maschinelle Lernsystem (38, 38a) eingerichtet ist, die Klassifizierung des Gebäudes (24) basierend auf der bereitgestellten Gebäudeinformation zu ermitteln.

Die Erfindung betrifft ferner ein Verfahren (100) zum Anlernen des maschinellen Lernsystems (38, 38a), ein Computerprogramm (30), ein computerlesbares Speichermedium (28) sowie eine Computervorrichtung (10, 10a).

## Beschreibung

Die Erfindung betrifft ein Verfahren zum Klassifizieren eines Gebäudes mittels eines maschinellen Lernsystems. Ferner betrifft die Erfindung das maschinelle Lernsystem sowie ein Verfahren zum prozessorgestützten Anlernen des maschinellen Lernsystems. Die Erfindung betrifft weiter ein Computerprogramm, ein computerlesbares Speichermedium und eine Computervorrichtung, die jeweils dazu vorgesehen und eingerichtet sind, die vorgeschlagenen Verfahren auszuführen.

### Stand der Technik

Aus der DE 10 2005 050 577 A1 ist ein neuronales Netz für eine Steuerungsvorrichtung bekannt.

### Offenbarung der Erfindung

Die Erfindung betrifft in einem ersten Aspekt ein Verfahren zum Klassifizieren eines Gebäudes hinsichtlich eines Zustands des Gebäudes, insbesondere hinsichtlich eines Bedarfs und/oder einer Auswirkung einer gebäudeändernden Maßnahme an diesem Gebäude, wobei zumindest eine, insbesondere eine Gebäudeeigenschaft charakterisierende, Gebäudeinformation bereitgestellt wird und mittels eines maschinellen Lernsystems abhängig von der bereitgestellten Gebäudeinformation das Gebäude klassifiziert wird, wobei das maschinelle Lernsystem eingerichtet ist, die Klassifizierung des Gebäudes basierend auf der bereitgestellten Gebäudeinformation zu ermitteln.

Das Verfahren zur Klassifizierung kann in einer Ausführungsform des Verfahrens ausschließlich in Hardware implementiert sein. In einer alternativen Ausführungsform kann das Verfahren auch in Form von Software oder in einer Mischung aus Software und Hardware realisiert sein. Insbesondere kann das Verfahren ein computerimplementiertes Verfahren darstellen, das mittels einer Prozessorvorrichtung einer Computervorrichtung durchgeführt wird. Zur Durchführung des Verfahrens kann die Computervorrichtung ferner zumindest eine Speichervorrichtung aufweisen, in der das Verfahren als maschinenlesbares Computerprogramm hinterlegt ist.

Unter "bereitstellen" ist insbesondere zu verstehen, dass einer das Verfahren durchführenden Vorrichtung, insbesondere einer Prozessorvorrichtung einer Computervorrichtung, die entsprechende Information - hier die eine Gebäudeeigenschaft charakterisierende Gebäudeinformation - bereitgestellt wird. In einer Ausführungsform des Verfahrens kann die entsprechende Information durch einen Bediener bereitgestellt werden. Das Bereitstellen kann dabei insbesondere durch eine Eingabe oder Auswahl durch einen Bediener, beispielsweise mittels einer Eingabevorrichtung oder mittels einer Menüauswahl oder dergleichen, erfolgen. In einer alternativen oder zusätzlichen Ausführungsform des Verfahrens kann das Bereitstellen durch das Einlesen der Gebäudeinformation aus einer Datei, beispielsweise durch Einlesen von auf einem Datenserver hinterlegten Daten, erfolgen. In einer wiederum alternativen oder zusätzlichen Ausführungsform des Verfahrens kann die Gebäudeinformation unter Verwendung einer Sensorvorrichtung, insbesondere einer Sensorvorrichtung der das Verfahren ausführenden Computervorrichtung, ermittelt oder gemessen und anschließend bereitgestellt werden. Eine Eingabevorrichtung stellt dabei typischerweise ebenfalls eine entsprechende Sensorvorrichtung dar. Unter der Sensorvorrichtung ist eine Vorrichtung zu verstehen, mittels der eine Gebäudeinformation von einem gegebenen Gebäude erfasst werden kann. Eine Sensorvorrichtung kann insbesondere einen oder mehrere Sensoren aufweisen. In einem Ausführungsbeispiel kann die Sensorvorrichtung als eine Entfernungs-Sensorvorrichtung, Winkel-Sensorvorrichtung, Feuchtigkeits-Sensorvorrichtung, Temperatur-Sensorvorrichtung, Infrarot-Sensorvorrichtung, Leckage-Sensorvorrichtung, visuelle Sensorvorrichtung, Nivellierungs-Sensorvorrichtung, Ortungs-Sensorvorrichtung, Strahlungs-Sensorvorrichtung, berührungssensitive Sensorvorrichtung, insbesondere eine Eingabevorrichtung zur Eingabe durch einen Bediener, eine stimmensensitive Eingabevorrichtung, oder dergleichen oder als eine Kombination derer realisiert sein. Durch das Bereitstellen einer Gebäudeinformation mittels zumindest einer Sensorvorrichtung, insbesondere mittels einer Mehrzahl von Sensorvorrichtungen, insbesondere einer Mehrzahl unterschiedlicher Sensorvorrichtungen, kann eine besonders präzise und zuverlässige Bestimmung dieser Gebäudeinformationen ermöglicht werden. Insbesondere können derart an ein zu analysierendes Gebäude angepasste Gebäudeinformationen zur Durchführung des Verfahrens zur Klassifizierung bereitgestellt werden. Ferner können Fehleingaben, insbesondere durch Abweichungen von einer tatsächlich vorliegenden Gebäudeinformation, vermieden werden.

Es wird vorgeschlagen, dass in einer Ausführungsform des Verfahrens die zumindest eine bereitgestellte Gebäudeinformation aus einer Liste gewählt wird, die zumindest umfasst: Entfernungsdaten, Winkeldaten, Aufmaßdaten, Feuchtigkeitsdaten, Temperaturdaten, Infrarotbilddaten, Leckage-Daten, visuelle Bilddaten, Nivellierungsdaten, Ortungsdaten, wirtschaftliche Daten, Strahlungsdaten, auf eine Fassade eines Gebäudes bezogene Daten, auf ein Dach eines Gebäudes bezogene Daten, auf eine Heizung eines Gebäudes bezogene Daten, auf Baumaterialen eines Gebäudes bezogene Daten, auf einen Schimmelbefall bezogene Daten, auf einen Standort eines Gebäudes bezogene Daten, auf ein Alter eines Gebäudes bezogene Daten, auf eine Nachbarschaft eines Gebäudes bezogene Daten, auf einen Ressourcenverbrauch eines Gebäudes bezogene. Insbesondere sind auch beliebige Kombinationen dieser Gebäudeinformationen zur Durchführung des Verfahrens zu Klassifizierung vorteilhaft geeignet. Gebäudeinformationen aus dieser Liste eignen sich gut, eine zuverlässige Klassifizierung und somit Analyse eines Gebäudes hinsichtlich eines Zustands des Gebäudes, insbesondere hinsichtlich eines Bedarfs und/oder einer Auswirkung einer gebäudeändernden Maßnahme an diesem Gebäude, nach erfindungsgemäßem Verfahren durchzuführen.

Insbesondere ist in einer Ausführungsform des Verfahrens unter einer Klassifizierung eines Gebäudes hinsichtlich eines Zustands des Gebäudes, insbesondere hinsichtlich eines Bedarfs und/oder einer Auswirkung einer gebäudeändernden Maßnahme an diesem Gebäude, zu verstehen, dass das maschinelle Lernsystem das Gebäude hinsichtlich zumindest einer der nachfolgenden Klassen klassifiziert:
- einer Klasse, welche einen Bedarf einer gebäudeverändernden Maßnahme, insbesondere eines zeitabhängigen Verlaufs eines Bedarfs einer gebäudeverändernden Maßnahme charakterisiert,
- einer Klasse, welche eine Dringlichkeit einer gebäudeverändernden Maßnahme charakterisiert,
- einer Klasse, welche eine gesundheitliche Relevanz einer gebäudeverändernden Maßnahme charakterisiert,
- einer Klasse, welche ein Energieeinsparpotential und/oder ein Rohstoffeinsparpotential einer gebäudeverändernden Maßnahme charakterisiert,
- einer Klasse, welche eine Verteilung eines Bedarfs einer gebäudeverändernden Maßnahme auf einzelne Gebäudebestandteile charakterisiert,
- einer Klasse, welche eine physikalische Charakteristik einer gebäudeverändernden Maßnahme charakterisiert,
Ferner kann eine Klasse definiert sein, die eine wirtschaftliche Charakteristik einer gebäudeverändernden Maßnahme charakterisiert.

Unter einer gebäudeändernden Maßnahme ist dabei jegliche Maßnahme zur Instandsetzung und Beseitigung von Schäden eines Gebäudes zu verstehen, also beispielsweise Renovierung, Durchführung von Schönheitsreparaturen, Durchführung von Instandsetzungsarbeiten, Restaurierung oder dergleichen. Ferner können auch ein Gebäude abändernde, insbesondere verbessernde oder verschönernde, Maßnahmen verstanden werden, die insbesondere einen besseren Zustand des Gebäudes zur Folge haben. Beispielsweise kann ein Gebäude im Rahmen einer Sanierung auf den aktuellen Stand der Technik (bzw. aktuelle Bauvorschriften) angepasst werden.

Es wird vorgeschlagen, dass in einer Ausführungsform des Verfahrens die Klassifizierung des Gebäudes, d.h. insbesondere ein Ergebnis der Klassifizierung, mittels einer Ausgabevorrichtung, insbesondere einer Ausgabevorrichtung der das Verfahren durchführenden Computervorrichtung, ausgegeben wird. Beispielsweise ist denkbar, die Klassifizierung unter Verwendung einer taktilen, akustischen oder visuellen Ausgabevorrichtung, insbesondere der Computervorrichtung zugehörig, auszugeben. Insbesondere kann eine Ausgabe in grafischer Form unter Verwendung eines Bildschirms, insbesondere eines Bildschirms der Computervorrichtung, erfolgen. Alternativ oder zusätzlich kann eine Ausgabe der Klassifizierung unter Verwendung einer Datenkommunikationsvorrichtung an ein externes Gerät erfolgen. Es sei darauf hingewiesen, dass unter Anwendung des erfindungsgemäßen Verfahrens zur Klassifizierung, insbesondere in Kombination mit der Ausgabe der Klassifizierung, ein Zustand des Gebäudes, insbesondere hinsichtlich eines Bedarfs und/oder einer Auswirkung einer gebäudeändernden Maßnahme an diesem Gebäude, der menschlichen Wahrnehmung des Bedieners vorteilhaft zugänglich wird.

Ferner wird vorgeschlagen, dass in einer Ausführungsform des Verfahrens die Klassifizierung des Gebäudes an eine Steuervorrichtung ausgegeben wird, wobei mittels der Steuervorrichtung unter Verwendung der Klassifizierung eine Steuergröße zum Ansteuern eines physikalischen Aktors ermittelt wird. Eine Steuervorrichtung dient dabei der Steuerung, insbesondere dem Betrieb, eines physikalischen Aktors, beispielsweise durch Anwendung von Regelroutinen und/oder Steuerroutinen. Die Steuervorrichtung ist zumindest dazu vorgesehen, anhand der Klassifizierung eine weitere Verarbeitung der Information durchzuführen und derart die Klassifizierung in eine Steuergröße zum Ansteuern des Aktors zu übersetzen. Insbesondere kann die Steuervorrichtung auch eine Steuervorrichtung der das Verfahren zur Klassifizierung durchführenden Computervorrichtung darstellen. Dabei ist denkbar, dass der physikalische Aktor ebenfalls zur Computervorrichtung zugeordnet realisiert ist. Beispielsweise ist denkbar, dass in Abhängigkeit der Klassifizierung des Gebäudes eine Liste mit benötigtem Werkzeug zur Durchführung von notwendigen gebäudeändernden Maßnahmen sowie eine Liste über durchzuführende Tätigkeiten ermittelt werden, wobei diese Listen mittels eines Druckers ausgegeben werden und ferner die benötigten Werkzeuge von einem Werkzeugwarenlagersystem automatisiert ausgegeben werden.

Ferner wird vorgeschlagen, dass in einer Ausführungsform des Verfahrens die Klassifizierung des Gebäudes an eine Steuervorrichtung, insbesondere eine Steuervorrichtung der das Verfahren zur Klassifizierung durchführenden Computervorrichtung, ausgegeben wird, wobei mittels der Steuervorrichtung unter Verwendung der Klassifizierung eine Steuergröße zum Ansteuern eines zumindest teilautonomen Roboters und/oder eines zumindest teilautonomen Fertigungssystems ermittelt wird. Der physikalische Aktor kann somit als ein zumindest teilautonomer Roboter und/oder als ein zumindest teilautonomes Fertigungssystem realisiert sein. Unter einem zumindest teilautonomen Roboter bzw. einem zumindest teilautonomen Fertigungssystem soll insbesondere ein zumindest teilweise automatisches mobiles Gerät verstanden werden, welches eine Arbeit im Rahmen einer gebäudeändernden Maßnahme zumindest teilweise selbsttätig verrichtet. Insbesondere soll der Roboter eine Arbeit selbsttätig beginnen, selbsttätig beenden und/oder selbsttätig zumindest einen Parameter betreffend die Bearbeitung auswählen und/oder beeinflussen. Darüber hinaus soll insbesondere ein Gerät verstanden werden, das sich zumindest zur Verrichtung dieser Arbeit selbsttätig bewegt und/oder sich autonom in einem vorgegebenen Arbeitsbereich - insbesondere dem Gebäude - fortbewegt. Typische Anwendungsbeispiele solcher zumindest teilautonomen Roboter umfassen vielfältige Tätigkeiten wie beispielsweise reinigen, (ein)sammeln, sortieren, kartieren, polieren, schleifen, malen oder dergleichen (Roboter) bzw. zusammensetzen, montieren, befestigen, demontieren, abreißen, einreißen oder dergleichen (Fertigungssystem).

Es wird vorgeschlagen, dass in einer Ausführungsform des Verfahrens zur Klassifizierung das maschinelle Lernsystem ein, insbesondere künstliches, neuronales Netz umfasst. Das neuronale Netz besteht dabei aus einer Verkettung neuronaler Schichten, wobei die Topologie des Netzes zur Durchführung des Verfahrens eingerichtet und angepasst ist. Dem neuronalen Netz wird dabei zumindest eine Gebäudeinformation als Eingangsgröße bereitgestellt, wobei die Gebäudeinformation anschließend durch das neuronale Netz propagiert wird. Entsprechend berechnet jede (verdeckte) Schicht des neuronalen Netzes eine Ausgangsgröße, die wiederum als Eingangsgröße einer folgenden Schicht des Netzes verwendet wird. Die letzte Schicht des Netzes (Ausgabeschicht) erlaubt das Ablesen der Klassifizierung, die basierend auf der eingegebenen Gebäudeinformation abgeschätzt wurde. Ein neuronales Netz, beispielsweise ein bayessches Netz, weist dabei den Vorteil auf, dass gegenüber existierenden statistischen Ansätze eine zuverlässigere Klassifizierung des Gebäudes hinsichtlich eines Zustands des Gebäudes möglich ist. Insbesondere können auch bei großen Datenmengen zur bereitgestellten Gebäudeinformation und unterschiedlichen Einflussfaktoren auf die Klassifizierung sinnvolle Ergebnisse der Klassifizierung ermittelt werden.

Gemäß einem weiteren Aspekt der Erfindung wird ein Verfahren zum prozessorgestützten Anlernen des maschinellen Lernsystems, insbesondere des neuronalen Netzes, vorgeschlagen, sodass das maschinelle Lernsystem zur Durchführung des vorgeschlagenen Verfahrens zur Klassifizierung eines Gebäudes hinsichtlich eines Zustands des Gebäudes eingerichtet und vorgesehen ist. Das Verfahren zum Anlernen weist zumindest folgende Schritte auf:
- Bereitstellen von Trainingsdaten bestehend aus Trainingseingangsdaten und Trainingsausgangsdaten, wobei die Trainingseingangsdaten Gebäudeinformationen zu einer Vielzahl erfasster Gebäude und die Trainingsausgangsdaten jeweils zumindest eine zugeordnete Klassifizierung, insbesondere zugeordnete Klassifizierungen, der jeweiligen Gebäude umfassen,
- Anlernen des maschinellen Lernsystems, insbesondere des neuronalen Netzes, wobei Parameter des maschinellen Lernsystems, insbesondere des neuronalen Netzes, derart angepasst werden, dass das maschinelle Lernsystem abhängig von den angepassten Parametern und abhängig von den bereitgestellten Trainingseingangsdaten die jeweils zugehörigen Trainingsausgangsdaten als gewünschtes Klassifizierungsergebnis ermittelt.

In Folge der Bereitstellung von Trainingseingangsdaten ermittelt das maschinelle Lernsystem, insbesondere das neuronale Netz, aus diesen Daten einen ersten Ausgabewert. Dieser Ausgabewert wird im Anlernprozess einem Trainingssystem (beispielsweise eine Computervorrichtung) zugeführt, wobei das Trainingssystem hieraus eine Vorschrift zur Anpassung der Parameter ermittelt, welche vorgibt, welcher oder welche Parameter des maschinellen Lernsystems auf welche Weise einer Anpassung unterzogen werden soll(en), um eine präzisere Ermittlung der vorgegebenen Trainingsausgangsdaten zu ermöglichen. Im Falle eines neuronalen Netzes kann diese Anpassung durch Vorgabe erwarteter bzw. gewünschter Werte für den Ausgabewert und anschließende Rückwärts-Propagation erfolgen. Ferner wird vorgeschlagen, dass in einer Ausführungsform des Verfahrens zum Anlernen die Trainingseingangsdaten aus einer Liste ausgewählt sind, die zumindest umfasst: Entfernungsdaten, Winkeldaten, Aufmaßdaten, Feuchtigkeitsdaten, Temperaturdaten, Infrarotbilddaten, Leckage-Daten, visuelle Bilddaten, Nivellierungsdaten, Ortungsdaten, wirtschaftliche Daten, Strahlungsdaten, auf eine Fassade eines Gebäudes bezogene Daten, auf ein Dach eines Gebäudes bezogene Daten, auf eine Heizung eines Gebäudes bezogene Daten, auf Baumaterialen eines Gebäudes bezogene Daten, auf einen Schimmelbefall bezogene Daten, auf einen Standort eines Gebäudes bezogene Daten, auf einen Ressourcenverbrauch eines Gebäudes bezogene Daten, auf ein Alter eines Gebäudes bezogene Daten, auf eine Nachbarschaft eines Gebäudes bezogene Daten oder Kombinationen davon. Ferner wird vorgeschlagen, dass die Trainingsausgangsdaten aus einer Liste ausgewählt sind, die zumindest eine Klassifizierung des Gebäudes hinsichtlich folgender Aspekte umfasst: eines Bedarfs einer gebäudeverändernden Maßnahme, insbesondere eines zeitabhängigen Verlaufs eines Bedarfs einer gebäudeverändernden Maßnahme und/oder einer Dringlichkeit einer gebäudeverändernden Maßnahme, einer gesundheitlichen Relevanz einer gebäudeverändernden Maßnahme und/oder eines Energieeinsparpotentials einer gebäudeverändernden Maßnahme und/oder eines Rohstoffeinsparpotentials einer gebäudeverändernden Maßnahme und/oder einer Verteilung eines Bedarfs einer gebäudeverändernden Maßnahme auf einzelne Gebäudebestandteile und/oder einer physikalischen Charakteristik und/oder einer wirtschaftlichen Charakteristik, insbesondere einer gebäudeverändernden Maßnahme.

Derart kann ein besonders zielgerichtetes Verfahren zum Anlernen angegeben werden, dass auf in einem Verfahren zum Klassifizieren vorteilhaft zu verwendende bereitgestellte Gebäudeinformationen, insbesondere mittels zumindest einer Sensorvorrichtung bereitgestellter Gebäudeinformationen, angepasst ist, da es als Grundlage für das Anlernen die gleichen Informationsquellen verwendet.

In einem weiteren Aspekt der Erfindung wird das maschinelle Lernsystem, insbesondere das neuronale Netz, ganz insbesondere das bayessches Netz, zur Durchführung des erfindungsgemäßen Verfahrens zur Klassifizierung eines Gebäudes hinsichtlich eines Zustands des Gebäudes vorgeschlagen. Das maschinelle Lernsystem wird insbesondere durch Ausführen des erfindungsgemäßen Verfahrens zum Anlernen des maschinellen Lernsystems erhalten.

In einem weiteren Aspekt wird ein Computerprogramm vorgeschlagen. Das Computerprogramm ist eingerichtet, eines der vorherigen genannten Verfahren auszuführen. Das Computerprogramm umfasst Anweisungen, die eine Prozessorvorrichtung einer Computervorrichtung veranlassen, eines der genannten Verfahren mit all seinen Schritten auszuführen, wenn das Computerprogramm auf der Computervorrichtung abläuft.

Ferner wird ein computerlesbares Speichermedium vorgeschlagen, auf welchem das Computerprogramm hinterlegt, insbesondere gespeichert, ist. Speichermedien an sich sind einem Fachmann dabei bekannt.

Des Weiteren wird eine Computervorrichtung vorgeschlagen, die eingerichtet ist eines der beschriebenen Verfahren auszuführen. Insbesondere wird eine Computervorrichtung zum Klassifizieren eines Gebäudes hinsichtlich eines Zustands des Gebäudes, insbesondere hinsichtlich eines Bedarfs und/oder einer Auswirkung einer gebäudeändernden Maßnahme an diesem Gebäude, mit zumindest einer Prozessorvorrichtung und einer Speichervorrichtung vorgeschlagen, wobei auf der Speichervorrichtung Befehle hinterlegt sind, die beim Ausführen dieser durch die Prozessorvorrichtung bewirken, dass die Computervorrichtung zumindest das Verfahren zur Klassifizierung ausführt. Unter einer "Prozessorvorrichtung" soll insbesondere eine Vorrichtung verstanden werden, die zumindest einen Informationseingang, eine Informationsverarbeitungseinheit zur Bearbeitung sowie eine Informationsausgabe zur Weitergabe der bearbeiteten und/oder ausgewerteten Informationen aufweist. In einem Ausführungsbeispiel umfasst die Prozessorvorrichtung zumindest einen Prozessor. Eine "Speichervorrichtung" dient dabei dazu, ein zur Durchführung eines der beschriebenen Verfahren notwendiges Computerprogramm für die Prozessorvorrichtung bereitzuhalten.

In einer Ausführungsform der Computervorrichtung ist diese als ein handgehaltenes Messgerät realisiert. Unter einem "handgehaltenen" Messgerät soll dabei insbesondere verstanden werden, dass das Messgerät ohne Zuhilfenahme einer Transportmaschine lediglich mit den Händen, insbesondere mit einer Hand, transportiert werden kann. Insbesondere kann das Messgerät während eines Messvorgangs in einer von einem Bediener frei ausgeführten Bewegung handgehalten durch einen Raum, insbesondere durch oder um das zu untersuchende Gebäude geführt werden. Die Masse des handgehaltenen Messgeräts beträgt insbesondere dabei weniger als 5 kg, vorteilhaft weniger als 3 kg und besonders vorteilhaft weniger als 1 kg. Insbesondere weist das handgehaltene Messgerät ein Gehäuse mit einem Griff oder einem Griffbereich auf, mit dem es durch einen Bediener geführt werden kann. Ferner kann in einem Ausführungsbeispiel das Messgerät ein Gehäuse aufweisen, das zumindest die wesentlichen funktionalen Komponenten des Messgeräts aufnimmt. Beispielsweise nimmt das Gehäuse zumindest eine Steuervorrichtung, eine Prozessorvorrichtung, eine Energieversorgungsvorrichtung, eine Eingabevorrichtung, eine Ausgabevorrichtung wie einen Bildschirm, eine Datenkommunikationsvorrichtung, oder dergleichen auf. Insbesondere sind die Komponenten in ihrem Gesamtvolumen zu mehr als 50 %, insbesondere zu mehr als 75 % und ganz insbesondere zu 100 % in dem Gehäuse des Messgeräts untergebracht. Auf diese Weise kann eine besonders kompaktes und leicht einhändig durch einen Bediener führbares Messgerät realisiert werden.

Ferner wird vorgeschlagen, dass die Computervorrichtung zumindest eine Sensorvorrichtung aufweist, die dazu vorgesehen ist, der Prozessorvorrichtung zumindest eine Gebäudeinformation bereitzustellen. Unter der Sensorvorrichtung ist dabei eine zuvor beschriebene Vorrichtung zum Messen und/oder Ermitteln einer eine Gebäudeeigenschaft charakterisierenden Gebäudeinformation zu verstehen, beispielsweise eine Infrarot-Sensorvorrichtung, eine visuelle Sensorvorrichtung oder dergleichen.

Alternativ oder zusätzlich kann die Computervorrichtung zumindest eine Ausgabevorrichtung zur Ausgabe der Klassifizierung aufweisen. Eine entsprechende Ausgabevorrichtung wurde bereits beschrieben und kann in einem Ausführungsbeispiel als Bildschirm realisiert sein.

In einer Ausführungsform der Computervorrichtung weist die Computervorrichtung eine Steuervorrichtung auf, mittels der unter Verwendung der Klassifizierung eine Steuergröße zum Ansteuern eines physikalischen Aktors ermittelbar ist. Der physikalische Aktor kann dabei der Computervorrichtung zugehörig realisiert sein, beispielsweise intern oder extern zur Computervorrichtung, oder als eine weiteres, von der Computervorrichtung unabhängige Vorrichtung. In einem Ausführungsbeispiel kann der physikalische Aktor als ein zumindest teilautonomer Roboter und/oder als ein zumindest teilautonomes Fertigungssystem realisiert sein. In einer Ausführungsform ist die Computervorrichtung selbst als ein zumindest teilautonomer Roboter und/oder als ein zumindest teilautonomes Fertigungssystem realisiert.

Unter "vorgesehen" und "eingerichtet" soll im Folgenden speziell "programmiert", "ausgelegt", "konzipiert" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreicher Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine schematische Darstellung einer Ausführungsform einer Computervorrichtung in perspektivischer Frontansicht,
- Figur 2: eine schematische Darstellung einer Ausführungsform einer Computervorrichtung in perspektivischer Rückansicht,
- Figur 3: eine schematische Darstellung einer Ausführungsform einer Computervorrichtung vor einem zu vermessenden Gebäude,
- Figur 4: eine schematische Darstellung eines neuronalen Netzes,
- Figur 5: eine schematische Darstellung einer Ausführungsform eines Verfahrens zur Klassifizierung,
- Figur 6: eine schematische Darstellung einer Ausführungsform eines Verfahrens zum Anlernen.

### Beschreibung der Ausführungsbeispiele

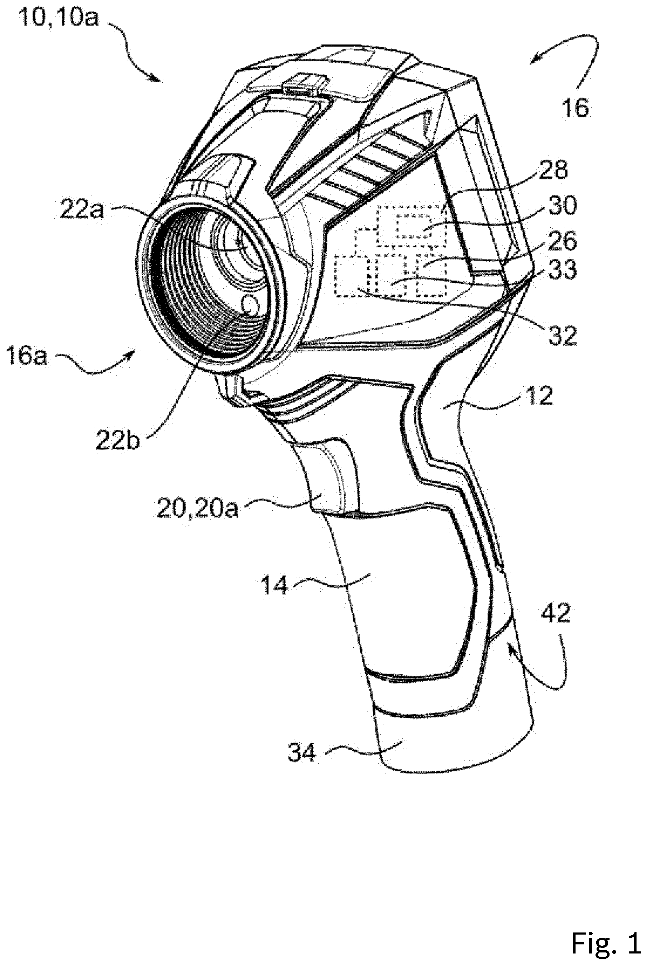

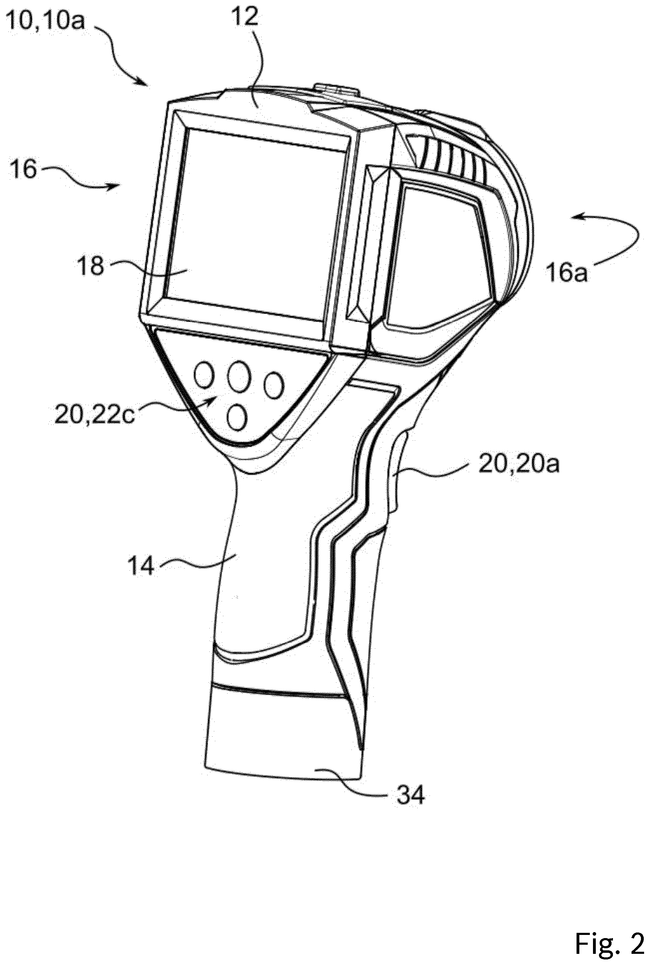

Im Folgenden wird eine Computervorrichtung 10 in Form eines handgehaltenen Messgeräts 10a zum Klassifizieren eines Gebäudes hinsichtlich eines Zustands des Gebäudes, insbesondere hinsichtlich eines Bedarfs und/oder einer Auswirkung einer gebäudeändernden Maßnahme an diesem Gebäude, vorgestellt. Figur 1 und Figur 2 zeigen eine beispielhafte Ausführungsform dieser Computervorrichtung 10 in perspektivischer Frontansicht bzw. in einer perspektivischen Rückansicht.

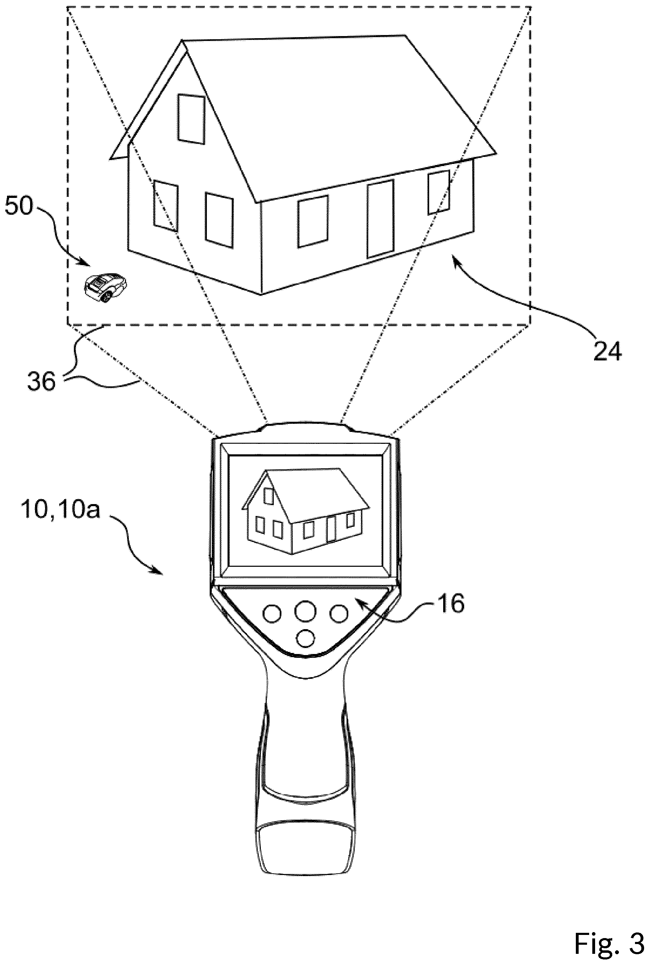

Die Computervorrichtung 10 umfasst ein Gehäuse 12 mit einem Griff 14. Mit dem Griff 14 kann die Computervorrichtung 10 während ihrer Benutzung bequem in einer Hand gehalten werden. Das Gehäuse 12 der Computervorrichtung 10 weist weiterhin auf einer einem Bediener während der Benutzung der Computervorrichtung 10 zugewandten Seite 16 eine Ausgabevorrichtung 18 in Form eines berührungssensitiven Bildschirms sowie Bedienelemente 20 zur Bedienereingabe und Steuerung der Computervorrichtung 10 auf. Insbesondere weist die Computervorrichtung 10 einen Trigger 20a auf, mit dem ein Bediener eine Ermittlung von Gebäudeinformationen unter Verwendung von Sensorvorrichtungen 22a-c der Computervorrichtung 10 auslösen kann. Die Gebäudeinformationen betreffen dabei ein untersuchtes bzw. zu analysierendes Gebäude 24 (vgl. Figur 3). Die Computervorrichtung 10 weist eine Prozessorvorrichtung 26 und eine Speichervorrichtung 28 auf. Auf der Speichervorrichtung 28 ist ein Computerprogramm 30 bestehend aus Befehlen hinterlegt, die bei Ausführung durch die Prozessorvorrichtung 28 bewirken, dass die Computervorrichtung 10 das Verfahren zum Klassifizieren eines Gebäudes 24 hinsichtlich eines Zustands des Gebäudes 24, insbesondere hinsichtlich eines Bedarfs und/oder einer Auswirkung einer gebäudeändernden Maßnahme an diesem Gebäude 24, durchführt.

Auf der einem Bediener bei Verwendung der Computervorrichtung 10 abgewandten Seite 16a des Gehäuses 12 sind drei Sensorvorrichtungen 22a-c angeordnet. Eine erste Sensorvorrichtung 22a ist als Infrarot-Sensorvorrichtung realisiert. Eine zweite Sensorvorrichtung 22b ist als visuelle Sensorvorrichtung realisiert. Eine dritte Sensorvorrichtung 22c ist als Eingabevorrichtung zur Eingabe von Gebäudeinformationen durch einen Bediener der Computervorrichtung 10 realisiert. Die Sensorvorrichtung 22c ist in diesem Ausführungsbeispiel durch die Bedienelemente 20 realisiert. Mittels der Sensorvorrichtungen 22a-c ist es möglich, unter Anwendung der Computervorrichtung 10, insbesondere des handgehaltenen Messgeräts 10a, ein Gebäude 24 zu vermessen. Dabei stellen die Sensorvorrichtungen 22a und 22b jeweils Gebäudeinformationen in Form von Messdaten, insbesondere Temperaturdaten, Infrarotbilddaten und visuellen Bilddaten, der Prozessorvorrichtung 26 bereit. Mittels der Bedienelemente 20, d.h. Sensorvorrichtung 22c, kann ein Bediener ferner spezielle Gebäudeinformationen wie beispielsweise auf eine Fassade eines Gebäudes 24 bezogene Daten, auf ein Dach eines Gebäudes 24 bezogene Daten, auf eine Heizung eines Gebäudes 24 bezogene Daten, auf Baumaterialen eines Gebäudes 24 bezogene Daten, auf einen Standort eines Gebäudes 24 bezogene Daten sowie auf ein Alter eines Gebäudes 24 bezogene Daten eingeben und somit der Prozessorvorrichtung 26 bereitstellen.

Mittels der Ausgabevorrichtung 18 kann die Computervorrichtung 10 die Klassifizierung eines untersuchten Gebäudes 24 an einen Bediener der Computervorrichtung 10 ausgeben. Ferner weist die Computervorrichtung 10 eine Steuervorrichtung 32 auf, mittels der unter Verwendung der Klassifizierung eine Steuergröße zum Ansteuern eines physikalischen Aktors 50 ermittelbar ist. Die Computervorrichtung 10 weist eine Datenkommunikationsvorrichtung 33 auf, mittels der die Computervorrichtung 10 die Steuergröße und/oder ein Ergebnis der Klassifizierung an ein externes Gerät, insbesondere an einen physikalischen Aktor 50 - hier realisiert als ein autonomer Montageroboter - ausgeben kann.

Auf der Unterseite der Computervorrichtung 10 weist der Griff 14 eine Aufnahme zur Aufnahme eines Energiespeichers 34 auf, der beispielhaft in Form eines aufladbaren Akkumulators oder in Form von Batterien ausgeführt sein kann.

Die Computervorrichtung 10 dient dazu, Gebäudeinformationen zu einem zu analysierenden Gebäude 24 zu ermitteln und daraus eine Klassifizierung des Gebäudes 24 hinsichtlich eines Zustands des Gebäudes 24, insbesondere hinsichtlich eines Bedarfs und/oder einer Auswirkung einer gebäudeändernden Maßnahme an diesem Gebäude 24, zu ermitteln. Ein beispielhaftes Anwendungsszenario ist in Figur 3 schematisch dargestellt. Nach Einschalten der Computervorrichtung 10 detektiert die Computervorrichtung 10 mittels der Sensorvorrichtungen 22a, 22b in dem Messbereich 36 Infrarot-Messdaten (abgestrahlte Wärmestrahlung) und visuellen Messdaten. Die von der Computervorrichtung 10 erfassten Messdaten charakterisieren das Gebäude 24 und stellen somit Gebäudeinformationen dar.
Die Computervorrichtung 10, insbesondere das Messgerät 10a, implementiert bei Ausführung des Verfahrens 200 zum Klassifizieren eines Gebäudes 24 ein maschinelles Lernsystem 38, das eingerichtet ist, die Klassifizierung des Gebäudes 24 basierend auf den bereitgestellten Gebäudeinformationen zu ermitteln. Insbesondere sind die Sensorvorrichtungen 22a-c dazu derart mit der Prozessorvorrichtung 26 signaltechnisch verbunden, dass die bereitgestellten Gebäudeinformationen dem maschinellen Lernsystem 38 als Eingangsgrößen bereitgestellt werden. In Abhängigkeit einer Mehrzahl von Parametern des maschinellen Lernsystems 38 ermittelt das maschinelle Lernsystem 38 dann eine Ausgangsgröße, insbesondere die entsprechende Klassifizierung des Gebäudes 24.

In einem alternativen Ausführungsbeispiel kann das maschinelle Lernsystem 38 (d.h. einschließlich der zur Durchführung benötigten Prozessorvorrichtung 26) in einem autonomen Roboter integriert sein (hier nicht näher dargestellt).

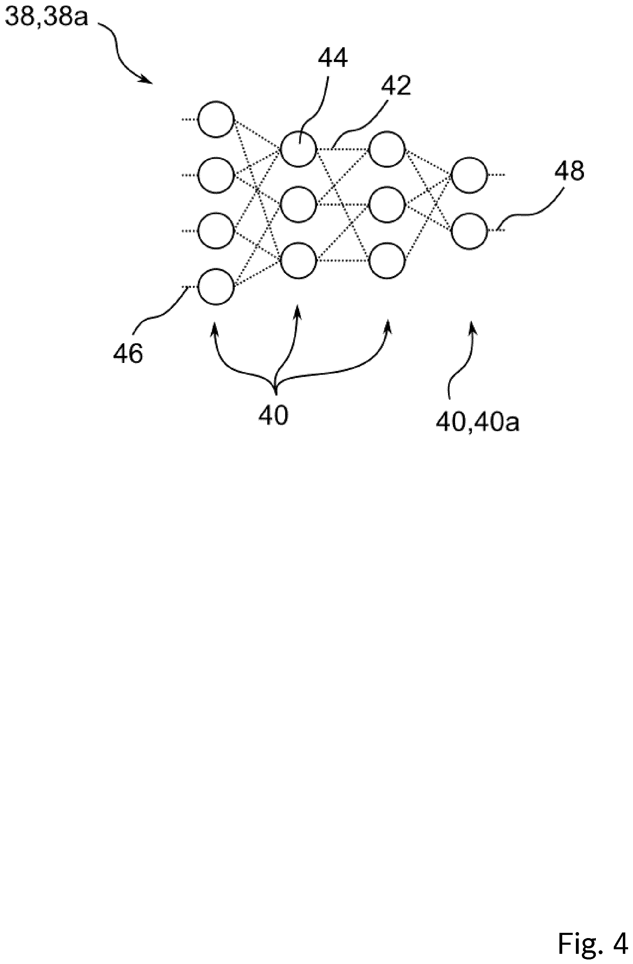

Figur 4 zeigt eine schematische Darstellung des maschinellen Lernsystems 38, welches in diesem Ausführungsbeispiel durch ein neuronales Netz 38a gegeben ist. Das neuronale Netz 38a umfasst mehrere Schichten 40, die jeweils mittels Verbindungen 42 miteinander verkettet sind und die jeweils mehrere Neuronen 44 umfassen. Dem neuronalen Netz 38a wird dabei zumindest eine Gebäudeinformation als Eingangsgröße 46 bereitgestellt, wobei die Gebäudeinformation anschließend durch das neuronale Netz 38a propagiert wird. Das neuronale Netz 38a ermittelt dabei schichtweise abhängig von der Eingangsgröße 46 eine Ausgangsgröße 48. Hierfür ermittelt jede Schicht 40 abhängig von der ihr bereitgestellten Eingangsgröße 46 und abhängig von den Parametern dieser Schicht eine Ausgangsgröße 48. Die Ausgangsgröße 48 wird daraufhin durch die Verbindungen 42 an die weiteren Schichten 40 weitergeleitet. Die letzte Schicht 40a des Netzes 38a erlaubt das Ablesen der Klassifizierung, die basierend auf der eingegebenen Gebäudeinformation berechnet wurde.

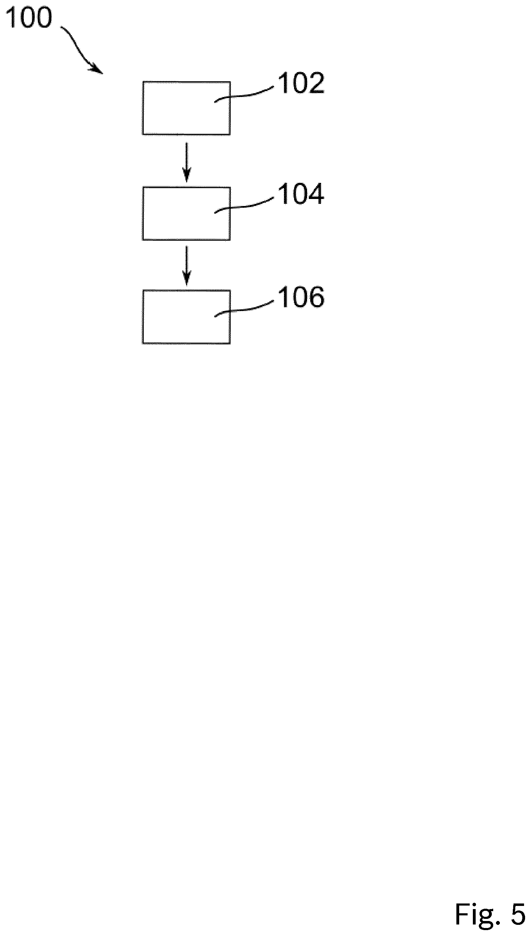

Figur 5 zeigt ein Verfahrensdiagramm eines Verfahrens 100 zum prozessorgestützten Anlernen des maschinellen Lernsystems 38, insbesondere des neuronalen Netzes 38a. Das Verfahren 100 wird ausgeführt von einem Trainingssystem (hier nicht näher dargestellt), das das maschinelle Lernsystem 38 anlernt. Dabei werden in Verfahrensschritt 102 dem maschinellen Lernsystem 38 Trainingsdaten bereitgestellt. Die Trainingsdaten umfassen Trainingseingangsdaten und Trainingsausgangsdaten, wobei die Trainingseingangsdaten Gebäudeinformationen zu einer Vielzahl erfasster Gebäude 24 und die Trainingsausgangsdaten jeweils zugeordnete Klassifizierungen der jeweiligen Gebäude 24 umfassen. Die Trainingseingangsdaten sind in diesem Ausführungsbeispiel Temperaturdaten, Infrarotbilddaten, visuelle Bilddaten sowie auf eine Fassade eines Gebäudes 24 bezogene Daten, auf ein Dach eines Gebäudes 24 bezogene Daten, auf eine Heizung eines Gebäudes 24 bezogene Daten, auf Baumaterialen eines Gebäudes 24 bezogene Daten, auf einen Standort eines Gebäudes 24 bezogene Daten, sowie auf ein Alter eines Gebäudes 24 bezogene Daten. Die Trainingsausgangsdaten betreffen in diesem Ausführungsbeispiel eine Klassifizierung des Gebäudes 24 hinsichtlich eines Bedarfs einer gebäudeverändernden Maßnahme (d.h. welche Maßnahmen sind durchzuführen?), eines zeitabhängigen Verlaufs eines Bedarfs einer gebäudeverändernden Maßnahme (d.h. wann sind welche Maßnahmen durchzuführen?) und einer Dringlichkeit einer gebäudeverändernden Maßnahme (d.h. welche Maßnahmen müssen unbedingt durchgeführt werden?). In Verfahrensschritt 104 wird das maschinelle Lernsystem 38, insbesondere das neuronale Netz 38a, angelernt. Beim Anlernen des maschinellen Lernsystems 38 werden die Parameter der jeweiligen Schichten 40 derart angepasst, dass das maschinelle Lernsystem 38 abhängig von den bereitgestellten Trainingseingangsdaten die jeweils zugeordneten Trainingsausgangsdaten ermittelt. Dabei kann das Anlernen des maschinellen Lernsystems 38 unter Verwendung einer Differenzfunktion (Kostenfunktion) durchgeführt werden, die insbesondere eine Differenz zwischen der berechneten Ausgangsgrößen 48 und der Trainingsausgangsdaten charakterisiert, wobei die Differenzfunktion mittels eines Gradiententabstiegsverfahrens hinsichtlich der Parameter optimiert wird. Ein derartiges Gradiententabstiegsverfahrens ist dem Fachmann aus dem Stand der Technik bekannt. Nachdem die Parameter optimiert wurden, werden diese in Verfahrensschritt 106 in der Speichervorrichtung 28 der Computervorrichtung 10, insbesondere des Messgeräts 10a, hinterlegt.

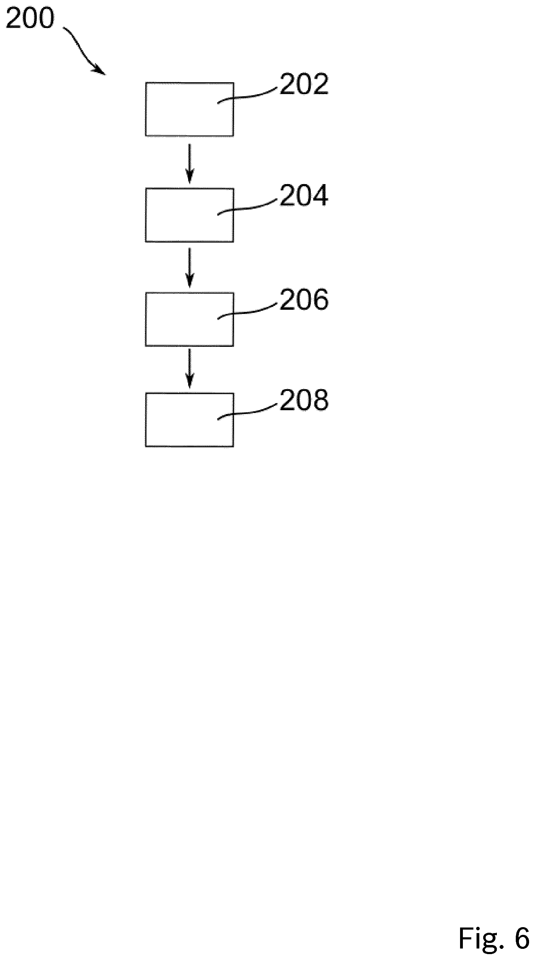

Abschließend ist in Figur 6 ein Verfahren 200 zum Klassifizieren eines Gebäudes 24 hinsichtlich eines Zustands des Gebäudes 24, insbesondere hinsichtlich eines Bedarfs und/oder einer Auswirkung einer gebäudeändernden Maßnahme an diesem Gebäude 24, dargestellt. Das Verfahren 200 wird dabei von der Computervorrichtung 10, insbesondere dem Messgerät 10a, durchgeführt. In einem ersten Verfahrensschritt 202 wird der Prozessorvorrichtung 26 der Computervorrichtung 10 unter Verwendung der Sensorvorrichtungen 22a-c zumindest eine Gebäudeinformation bereitgestellt. Die Gebäudeinformation stellt dabei in einem Beispiel eine Kombination von Temperaturdaten, Infrarotbilddaten, visuellen Bilddaten sowie auf eine Fassade eines Gebäudes 24 bezogene Daten, auf ein Dach eines Gebäudes 24 bezogene Daten, auf eine Heizung eines Gebäudes 24 bezogene Daten, auf Baumaterialen eines Gebäudes 24 bezogene Daten, auf einen Standort eines Gebäudes 24 bezogene Daten, sowie auf ein Alter eines Gebäudes 24 bezogene Daten dar. In Verfahrensschritt 204 wird mittels des maschinellen Lernsystems 38, insbesondere mittels des neuronalen Netzes 38a, abhängig von den bereitgestellten Gebäudeinformationen das Gebäude 24 klassifiziert. Die Klassifizierung betrifft dabei einen Bedarf einer gebäudeverändernden Maßnahme, einen zeitabhängigen Verlauf eines Bedarfs einer gebäudeverändernden Maßnahme und eine Dringlichkeit einer gebäudeverändernden Maßnahme. In Verfahrensschritt 206 wird anschließend das Ergebnis der Klassifizierung des Gebäudes 24 mittels der Ausgabevorrichtung 18 an einen Bediener der Computervorrichtung 10 ausgegeben und gleichzeitig an die Steuervorrichtung 32 der Computervorrichtung 10 ausgegeben. In Verfahrensschritt 208 wird ferner mittels der Steuervorrichtung 32 unter Verwendung der Klassifizierung eine Steuergröße zum Ansteuern eines physikalischen Aktors 50 ermittelt und an diesen unter Verwendung der Datenkommunikationsvorrichtung 33 ausgegeben.

## Patentansprüche

1. Verfahren (200) zum Klassifizieren eines Gebäudes (24) hinsichtlich eines Zustands des Gebäudes (24), insbesondere hinsichtlich eines Bedarfs und/oder einer Auswirkung einer gebäudeändernden Maßnahme an diesem Gebäude (24), wobei zumindest eine Gebäudeinformation bereitgestellt wird und mittels eines maschinellen Lernsystems (38, 38a) abhängig von der bereitgestellten Gebäudeinformation das Gebäude (24) klassifiziert wird, wobei das maschinelle Lernsystem (38, 38a) eingerichtet ist, die Klassifizierung des Gebäudes (24) basierend auf der bereitgestellten Gebäudeinformation zu ermitteln.

2. Verfahren (200) nach Anspruch 1, **dadurch gekennzeichnet, dass** das maschinelle Lernsystem (38, 38a) ein neuronalen Netzes (38a) umfasst.

3. Verfahren (200) nach einem der vorhergehenden Ansprüche, **dadurch gekennzeichnet, dass** das maschinelle Lernsystem (38, 38a) das Gebäude (24) hinsichtlich zumindest einer der nachfolgenden Klassen klassifiziert:
• einer Klasse, welche einen Bedarf einer gebäudeverändernden Maßnahme, insbesondere eines zeitabhängigen Verlaufs eines Bedarfs einer gebäudeverändernden Maßnahme, charakterisiert,
• einer Klasse, welche eine Dringlichkeit einer gebäudeverändernden Maßnahme charakterisiert,
• einer Klasse, welche eine gesundheitliche Relevanz einer gebäudeverändernden Maßnahme charakterisiert,
• einer Klasse, welche ein Energieeinsparpotential und/oder ein Rohstoffeinsparpotential einer gebäudeverändernden Maßnahme charakterisiert,
• einer Klasse, welche eine Verteilung eines Bedarfs einer gebäudeverändernden Maßnahme auf einzelne Gebäudebestandteile charakterisiert,
• einer Klasse, welche eine physikalische Charakteristik und/oder eine wirtschaftliche Charakteristik einer gebäudeverändernden Maßnahme charakterisiert.

4. Verfahren (200) nach einem der vorhergehenden Ansprüche, **dadurch gekennzeichnet, dass** die zumindest eine bereitgestellte Gebäudeinformation unter Verwendung einer Sensorvorrichtung (22a, 22b, 22c) bereitgestellt wird.

5. Verfahren (200) nach einem der vorhergehenden Ansprüche, **dadurch gekennzeichnet, dass** die zumindest eine bereitgestellte Gebäudeinformation aus einer Liste gewählt wird, die zumindest umfasst:
Entfernungsdaten, Winkeldaten, Aufmaßdaten, Feuchtigkeitsdaten, Temperaturdaten, Infrarotbilddaten, Leckage-Daten, visuelle Bilddaten, Nivellierungsdaten, Ortungsdaten, wirtschaftliche Daten, Strahlungsdaten, auf eine Fassade eines Gebäudes (24) bezogene Daten, auf ein Dach eines Gebäudes (24) bezogene Daten, auf eine Heizung eines Gebäudes (24) bezogene Daten, auf Baumaterialen eines Gebäudes (24) bezogene Daten, auf einen Schimmelbefall bezogene Daten, auf einen Standort eines Gebäudes (24) bezogene Daten, auf ein Alter eines Gebäudes (24) bezogene Daten, auf einen Ressourcenverbrauch eines Gebäudes (24) bezogene Daten, auf eine Nachbarschaft eines Gebäudes (24) bezogene Daten oder Kombinationen davon.

6. Verfahren (200) nach einem der vorhergehenden Ansprüche, **dadurch gekennzeichnet, dass** die Klassifizierung des Gebäudes (24) mittels einer Ausgabevorrichtung (18) ausgegeben wird.

7. Verfahren (200) nach einem der vorhergehenden Ansprüche, **dadurch gekennzeichnet, dass** die Klassifizierung des Gebäudes (24) an eine Steuervorrichtung (32) ausgegeben wird, wobei mittels der Steuervorrichtung (32) unter Verwendung der Klassifizierung eine Steuergröße zum Ansteuern eines physikalischen Aktors (50) ermittelt wird.

8. Verfahren (100) zum prozessorgestützten Anlernen eines maschinellen Lernsystems (38, 38a), insbesondere eines neuronalen Netzes (38a), sodass das maschinelle Lernsystem (38, 38a) zur Durchführung eines Verfahrens (200) nach einem der vorhergehenden Ansprüche eingerichtet ist, aufweisend die Schritte:
• Bereitstellen von Trainingsdaten bestehend aus Trainingseingangsdaten und Trainingsausgangsdaten, wobei die Trainingseingangsdaten Gebäudeinformationen zu einer Vielzahl erfasster Gebäude (24) und die Trainingsausgangsdaten jeweils zumindest eine zugeordnete Klassifizierung der jeweiligen Gebäude (24) umfassen,
• Anlernen des maschinellen Lernsystems (38, 38a), insbesondere des neuronalen Netzes (38a), wobei Parameter des maschinellen Lernsystems (38, 38a) derart angepasst werden, dass das maschinelle Lernsystem (38, 38a) abhängig von den angepassten Parametern und abhängig von den bereitgestellten Trainingseingangsdaten die jeweils zugehörigen Trainingsausgangsdaten ermittelt.

9. Verfahren (100) nach Anspruch 8, **dadurch gekennzeichnet, dass** die Trainingseingangsdaten aus einer Liste ausgewählt sind, die zumindest umfasst:
• Entfernungsdaten, Winkeldaten, Aufmaßdaten, Feuchtigkeitsdaten, Temperaturdaten, Infrarotbilddaten, Leckage-Daten, visuelle Bilddaten, Nivellierungsdaten, Ortungsdaten, wirtschaftliche Daten, Strahlungsdaten, auf eine Fassade eines Gebäudes (24) bezogene Daten, auf ein Dach eines Gebäudes (24) bezogene Daten, auf eine Heizung eines Gebäudes (24) bezogene Daten, auf Baumaterialen eines Gebäudes (24) bezogene Daten, auf einen Schimmelbefall bezogene Daten, auf einen Standort eines Gebäudes (24) bezogene Daten, auf ein Alter eines Gebäudes (24) bezogene Daten, auf einen Ressourcenverbrauch eines Gebäudes (24) bezogene Daten, auf eine Nachbarschaft eines Gebäudes (24) bezogene Daten oder Kombinationen davon
und die Trainingsausgangsdaten aus einer Liste ausgewählt sind, die zumindest eine Klassifizierung des Gebäudes (24) hinsichtlich folgender Aspekte umfasst:
• eines Bedarfs einer gebäudeverändernden Maßnahme, insbesondere eines zeitabhängigen Verlaufs eines Bedarfs einer gebäudeverändernden Maßnahme, einer Dringlichkeit einer gebäudeverändernden Maßnahme, einer gesundheitlichen Relevanz einer gebäudeverändernden Maßnahme, eines Energieeinsparpotentials einer gebäudeverändernden Maßnahme, eines Rohstoffeinsparpotentials einer gebäudeverändernden Maßnahme, einer Verteilung eines Bedarfs einer gebäudeverändernden Maßnahme auf einzelne Gebäudebestandteile, einer physikalischen Charakteristik und/oder einer wirtschaftlichen Charakteristik einer gebäudeverändernden Maßnahme oder Kombinationen davon.

10. Maschinelles Lernsystem (38,38a), insbesondere neuronales Netz (38a), zur Durchführung eines Verfahrens (200) nach einem der Ansprüche 1-7, erhältlich durch Ausführen eines Verfahrens (100) nach einem der Ansprüche 8-9.

11. Computerprogramm (30) umfassend Befehle, welche bei ihrer Ausführung mittels einer Prozessorvorrichtung (26) einer Computervorrichtung (10) die Computervorrichtung (10) veranlassen, das Verfahren (100, 200) nach einem der vorherigen Ansprüche auszuführen.

12. Computerlesbares Speichermedium (28), auf dem ein Computerprogramm (30) nach Anspruch 11 hinterlegt ist.

13. Computervorrichtung (10, 10a), insbesondere handgehaltenes Messgerät (10a), zum Klassifizieren eines Gebäudes (24) hinsichtlich eines Zustands des Gebäudes (24), insbesondere hinsichtlich eines Bedarfs und/oder einer Auswirkung einer gebäudeändernden Maßnahme an diesem Gebäude (24), mit zumindest einer Prozessorvorrichtung (26) und einer Speichervorrichtung (28), wobei auf der Speichervorrichtung (28) Befehle hinterlegt sind, die beim Ausführen dieser durch die Prozessorvorrichtung (26) bewirken, dass die Computervorrichtung (10, 10a) ein Verfahren (100, 200) der vorherigen Ansprüche ausführt.

14. Computervorrichtung (10, 10a) nach Anspruch 13, **dadurch gekennzeichnet, dass** die Computervorrichtung (10, 10a) zumindest eine Sensorvorrichtung (22a, 22b, 22c) aufweist, die dazu vorgesehen ist, der Prozessorvorrichtung (26) zumindest eine Gebäudeinformation bereitzustellen und/oder dass die Computervorrichtung (10, 10a) zumindest eine Ausgabevorrichtung (18) zur Ausgabe der Klassifizierung aufweist.

15. Computervorrichtung (10, 10a) nach einem der Ansprüche 13-14, **dadurch gekennzeichnet, dass** die Computervorrichtung (10, 10a) eine Steuervorrichtung (32) aufweist, mittels der unter Verwendung der Klassifizierung eine Steuergröße zum Ansteuern eines physikalischen Aktors (50) ermittelbar ist.
